# EUROPEAN PATENT APPLICATION

(11) **EP 1 018 611 A1**
(43) Date of publication of application: **12.07.2000**
(21) Application number: 99100272.6
(22) Date of filing: 08.01.1999
(51) Int. Cl.: F16H 55/38, F16H 55/56

(54) **Construction for a stepless variable pulley**

(71) Applicant: Liau, Bai-Guang, Ehr-Lun Hsiang, Yun-Lin Hsien (TW); Boahsin Industrial Co., Ltd., Ping-Chen City, Tao-Yuan Hsien (TW)
(72) Inventor: Liau, Bai-Guang, Erh-Lun Hsiang, Yun-Lin Hsien (TW)
(74) Representative: Patentanwälte Hauck, Graalfs, Wehnert, Döring, Siemons

(57) **Abstract**

A stepless variable pulley includes two disks (21) which are movably connected to each other and each of the disks has an inclined engaging surface from which a plurality of protrusions (22) radially extend. Each of the protrusions (22) has a first section (23) which is close to the center of the disk, a second section (24) connected to the first section (23) and a third section (25) which is connected to the second section (24). Each of the protrusions (22) has a first side (220) and a second side (221), wherein the distance between the first side (220) and the second side (221) of the first section (23) is smaller than that of the second section (24), and the distance between the first side (220) and the second side (221) of the second section (24) is smaller than that of the third section (25). A belt (31) is movable on the engaging surfaces of the two disks (21) and the three sections (23,24,25) provide different frictions to the belt (31).

## Description

### FIELD OF THE INVENITON

The present invention relates to a stepless variable pulley, and more particularly, to a pulley having an engaging surface for engaged with the belt and the engaging surface comprising three annular sections which have the same center, each of the three sections having a protrusion with different width.

### BACKGROUND OF THE INVENTION

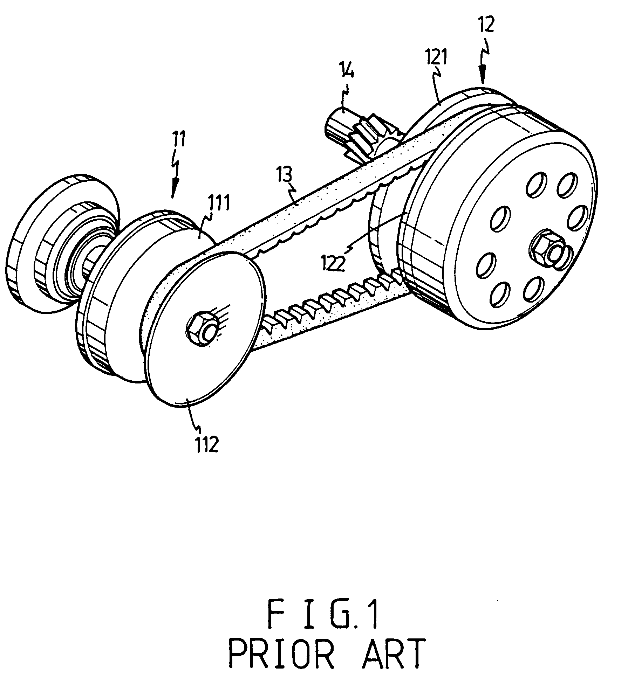

Figure 1 shows a conventional stepless transmission system used in a scooter wherein the power is transmitted by a belt 13 which is generally a V-belt and rotatably connected between the input pulley 11 and the output pulley 12. The input pulley 11 includes two disks 111, 112 and each of the two disks 111, 112 has an engaging surface to engage with the belt 13, and the output pulley 12 includes two disks 121, 122 and each of the two disks 121, 122 has an engaging surface to engage with the belt 13 so that the input pulley 11 is rotated by the motor and the torque is transmitted to the shaft 14 extending through the output pulley 12 by the belt 13. In a stepless transmitting system, the distance between the two disks 111, 112/121, 122 of each of the input pulley 11 and the output pulley 12 is variable so that the belt 13 is radially movable on the engaging surfaces of the two pulleys 11, 12 to transmit different torque and speed to the shaft 14. The engaging surface of each of the pulleys 11, 12 is a cone-shaped surface and has frictional wrinkles spread thereon so that the belt 13 is radially moved on the engaging surfaces according to the distance between the two disks 111, 112/121, 122 of the pulleys 11, 12. The wrinkles are worn out after a period of time of use so that the belt 13 tends to slip radially outward to the high speed/low torque area of the engaging surfaces so that the system will shake because the belt 13 cannot bear the torque at this area. That is to say, the belt 13 fails to be located in the middle speed/torque area of the engaging surfaces when moving on the engaging surfaces so that the performance of the engine will be reduced.

The present invention intends to provide a stepless variable pulley wherein a plurality of protrusions extend from the engaging surface of the pulley and each of the protrusions has different width along the radius direction so as to provide proper friction when the belt is moved thereon. The present invention has arisen to mitigate and/or obviate the disadvantage of the conventional pulleys of the stepless transmitting system.

### SUMMARY OF THE INVENTION

In accordance with one aspect of the present invention, there is provided a stepless variable pulley comprising two disks and each of the disks having an inclined engaging surface which has a plurality of protrusions extending radially therefrom and each of the protrusions has the first side and the second side. Each of the protrusions has a first section which is close to the center of the disk, a second section connected to the first section and a third section which is connected to the second section. The distance between the first side and the second side of the first section is smaller than that of the second section, the distance between the first side and the second side of the second section is smaller than that of the third section.

Further objects, advantages, and features of the present invention will become apparent from the following detailed description with appropriate reference to the accompanying drawings.

### BRIEF DESCRIPTION OF THE DRAWINGS

Fig. 1 is a perspective view of a conventional stepless transmitting system;

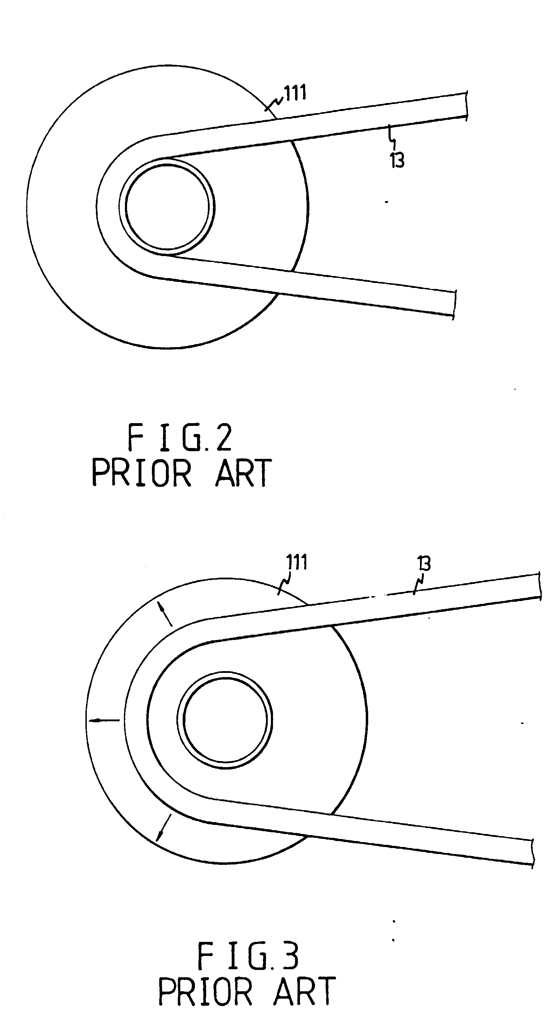

Fig. 2 is an illustrative view to show the belt is engaged with the disk of the conventional pulley of the system shown in Fig. 1;
Fig. 3 is an illustrative view to show the belt is moved radially outward on the disk of the conventional pulley of the system shown in Fig. 1;
Fig. 4 is an exploded view of the first embodiment of the two disks of the pulley in accordance with the present invention;
Fig. 5 is an illustrative view to show the belt is engaged with the first section of the disk of the pulley in accordance with the present invention;
Fig. 6 is an illustrative view to show the belt is moved radially outward to the second section on the disk of the pulley in accordance with the present invention;
Fig. 7 is an illustrative view to show the belt is moved radially outward to the third section on the disk of the pulley in accordance with the present invention;
Fig. 8 is an illustrative view to show the protrusion has rounded edges;
Fig. 9 is an illustrative view to show the second embodiment of the disk of the present invention;
Fig. 10 is an illustrative view to show the third embodiment of the disk of the present invention;
Fig. 11 is an illustrative view to show the fourth embodiment of the disk of the present invention;
Fig. 12 is an illustrative view to show the fifth embodiment of the disk of the present invention;
Fig. 13 is an illustrative view to show the sixth embodiment of the disk of the present invention;
Fig. 14 is an illustrative view to show the seventh embodiment of the disk of the present invention;
Fig. 15 is an illustrative view to show the eighth embodiment of the disk of the present invention;
Fig. 16 is an illustrative view to show the ninth embodiment of the disk of the present invention;
Fig. 17 is an illustrative view to show the tenth embodiment of the disk of the present invention;
Fig. 18 is an illustrative view to show the eleventh embodiment of the disk of the present invention;
Fig. 19 is an illustrative view to show the twelfth embodiment of the disk of the present invention;
Fig. 20 is an illustrative view to show the thirteenth embodiment of the disk of the present invention;
Fig. 21 is an illustrative view to show the fourteenth embodiment of the disk of the present invention;
Fig. 22 is an illustrative view to show that the angle defined between the engaging surface and the top of the protrusion is larger than 90 degrees, and
Fig. 23 an illustrative view to show the fifteenth embodiment of the disk of the present invention.

### DETAILED DESCRIPTION OF THE PREFERRED EMBODIMENTS

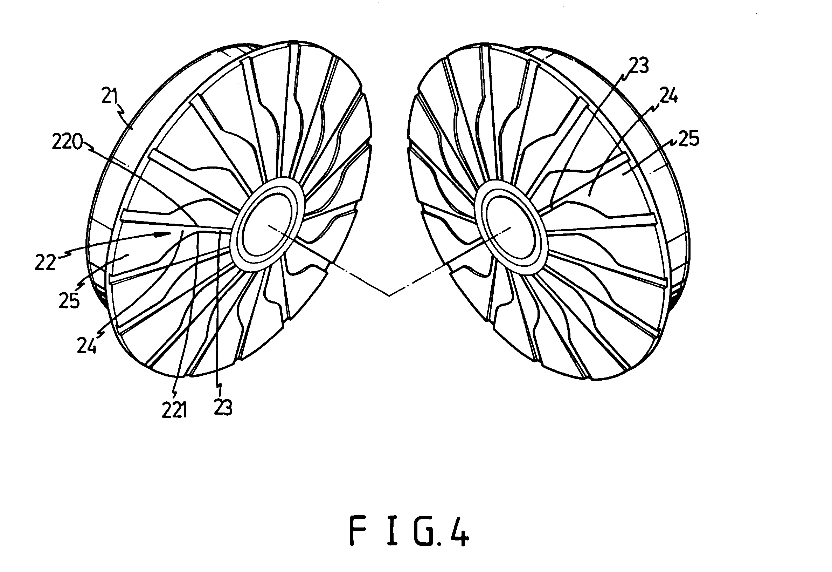

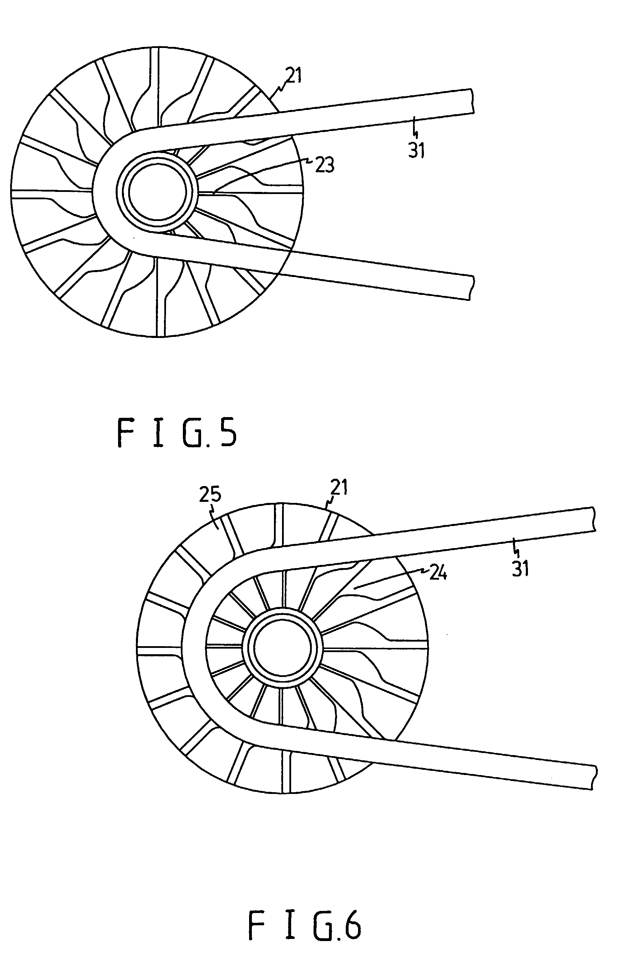

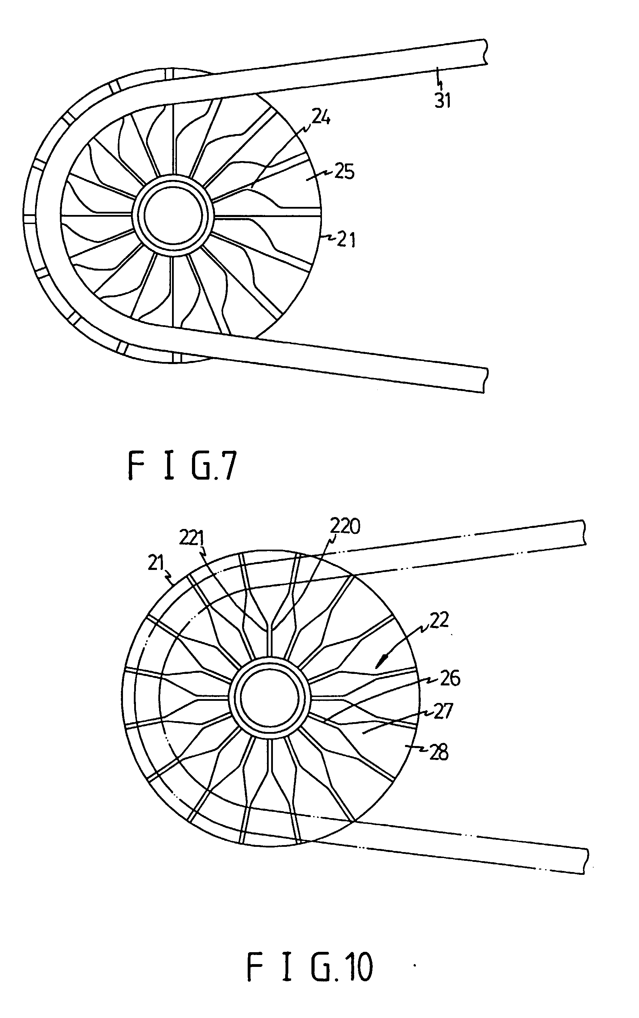

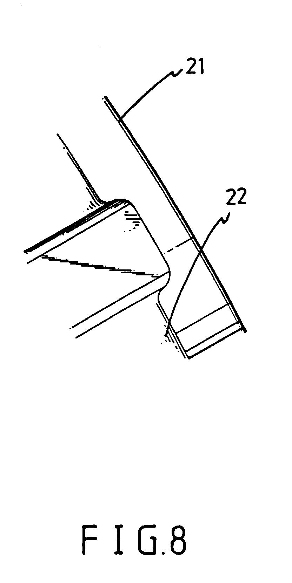

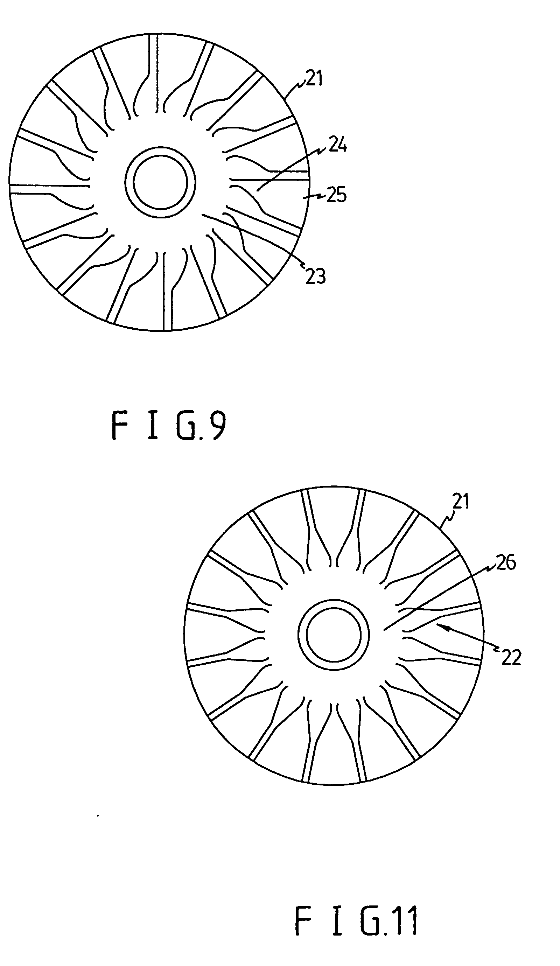

Referring to Figs. 4 to 7, the stepless variable pulley of the present invention comprises two disks 21 and each of the disks 21 has an inclined engaging surface, the two respective engaging surfaces facing to each other when the two disks 21 are connected together. Each of the engaging surfaces has a plurality of protrusions 22 extending radially therefrom which has a first side 220 and a second side 221. Each of the protrusions 22 has a first section 23 which is close to the center of the disk, a second section 24 connected to the first section 23 and a third section 25 which is connected to the second section 24. The first side 220 is a straight side and the second side 221 of the first section 23 is parallel with the second side 221 of the first section 23. The second side 221 of the second section 24 is a curved side which is divergent radially toward the third section 25. The second side 221 of the third section 25 of the protrusion 22 is an inclined side which is divergent relative to the first side 220. It is to be noted that, referring to Fig. 8, the first side 220 and the second side 221 of each of the protrusions 22 have a rounded edge so that the belt 31 will be not worn when moving on the disks 21. The distance between the first side 220 and the second side 221 of the first section 23 is smaller than the distance between the first side 220 and the second side 221 of the second section 24, and the distance between the first side 220 and the second side 221 of the second section 24 is smaller than the distance between the first side 220 and the second side 221 of the third section 25. Therefore, the belt 31 applies a large force on the smallest width in the first section 23 as shown in Fig. 5 so as to provide a large torque. When the belt 31 moves to the second section 24, the curved section side 221 thereof slows down the outward movement of the belt 31 which will retained within the section sections 24 of the protrusions 22 and moves toward the third sections 25 by increasing the r.p.m. of the engine (not shown) as shown in Fig. 6. When the belt 31 moves to the third section 24 as shown in Fig. 7, the area of the third section 25 is large enough so that the belt 31 may achieve a high speed with a low torque. Figure 9 shows the second embodiment of the disks 21 wherein the first side 220 and the second side 221 of the first section 23 of each of the protrusions 22 are flush with the engaging surface, that is to say, the first section 23 is a plain and inclined surface.

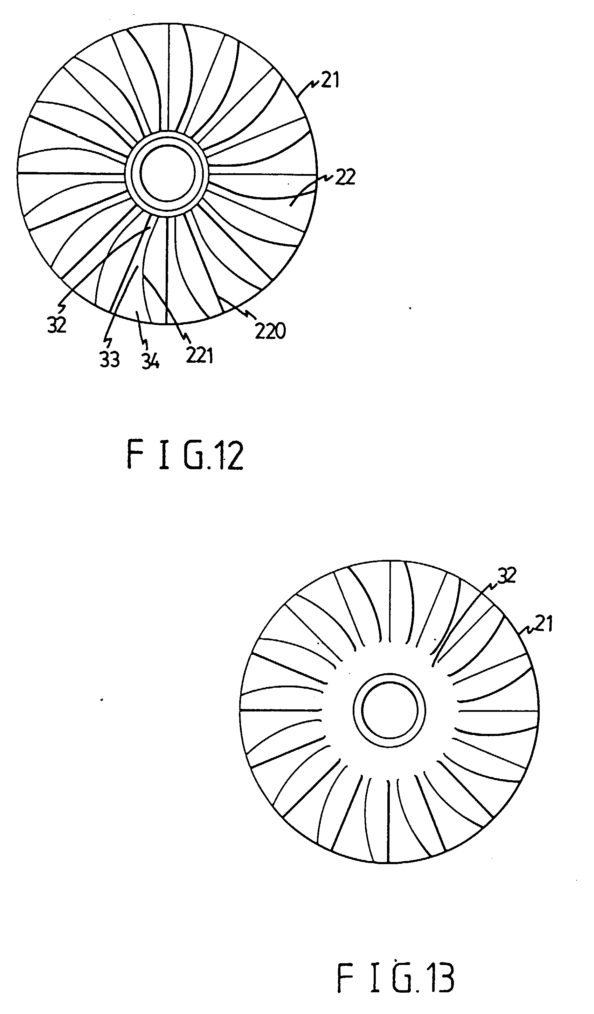

Figure 10 shows the third embodiment of the disks 21 wherein the first side 220 and the second side 221 of the first section 26 are parallel with each other, the first side 220 and the second side 221 of the second section 27 and the third section 28 are divergent. The distance between the first side 220 and the second side 221 of the first section 26 is smaller than the distance between the first side 220 and the second side 221 of the second section 27, and the distance between the first side 220 and the second side 221 of the second section 27 is smaller than the distance between the first side 220 and the second side 221 of the third section 28. Figure 11 shows the fourth embodiment of the disks 21 wherein the first side 220 and the second side 221 of the first section 26 of each of the protrusions 22 are flush with the engaging surface, that is to say, the first section 26 is a plain and inclined surface.

Figure 12 shows the fifth embodiment of the disks 21 wherein the first side 220 is a straight side and the second side 221 is a curved side. The distance between the first side 220 and the second side 221 of the first section 32 is smaller than the distance between the first side 220 and the second side 221 of the second section 33, and the distance between the first side 220 and the second side 221 of the second section 33 is smaller than the distance between the first side 220 and the second side 221 of the third section 34. Figure 13 shows the sixth embodiment of the disks 21 wherein the first side 220 and the second side 221 of the first section 32 of each of the protrusions 22 are flush with the engaging surface.

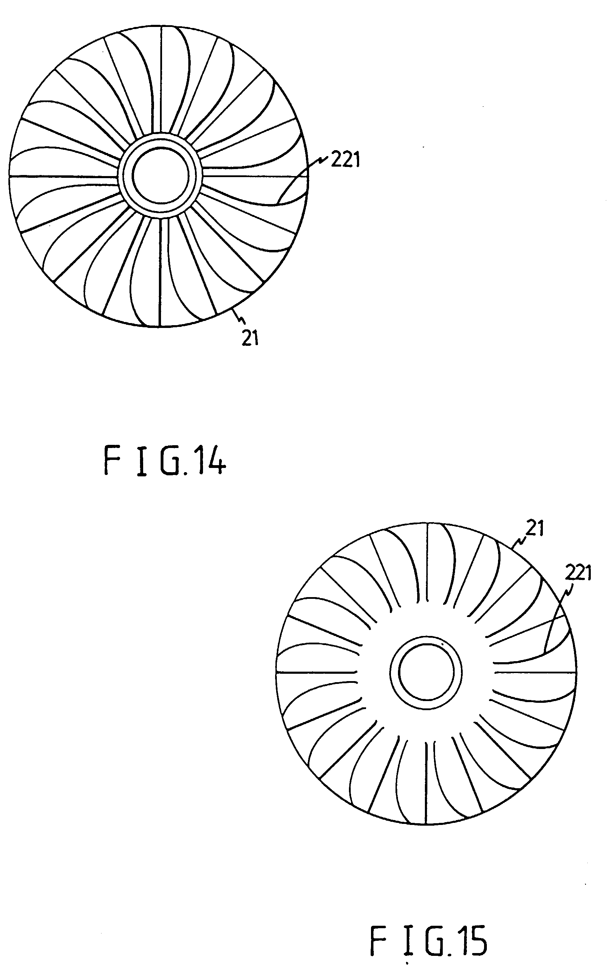

Figures 14 and 15 respectively show the seventh embodiment and the eighth embodiment of the disks 21, which are similar to those shown in Figs. 12 and 13 except that the curvature of the second side 221 in Figs. 14 and 15 is different from that of the Figs. 12 and 13.

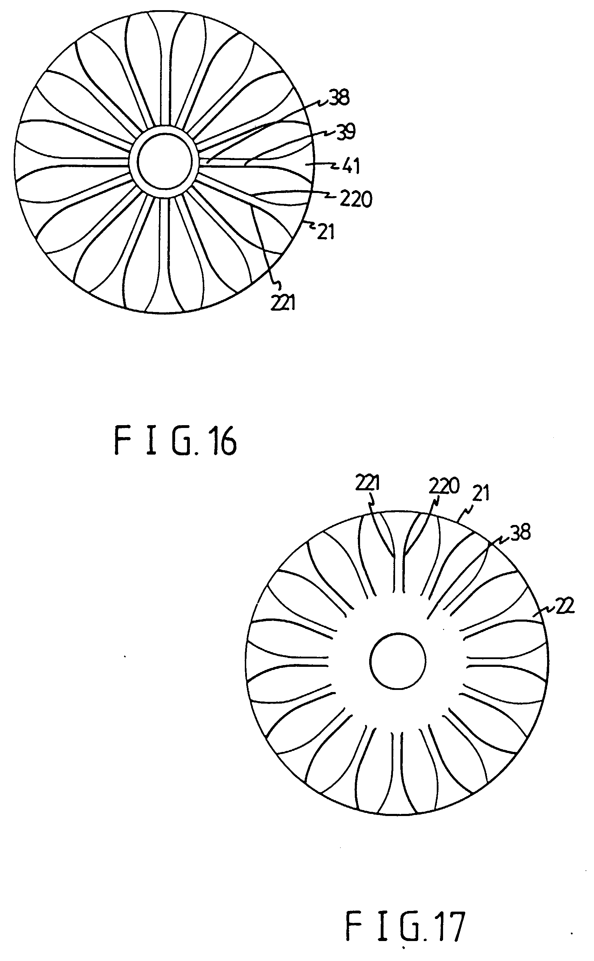

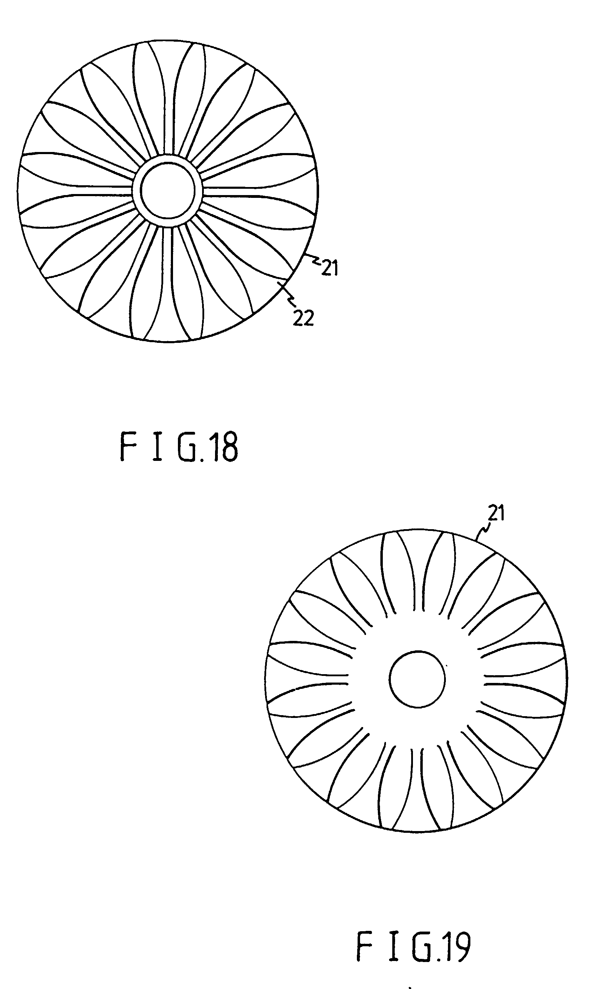

Figure 16 shows the ninth embodiment of the disks 21 wherein the first side 220 and the second side 221 of the first section 38 and the second section 39 are straight sides, and the first side 220 and the second side 221 of the third section 41 are divergent and curved sides. Figure 17 shows the tenth embodiment of the disks 21 wherein the first side 220 and the second side 221 of the first section 38 of each of the protrusions 22 are flush with the engaging surface.

Figures 18 and 19 respectively show the eleventh embodiment and the twelfth embodiment of the disks 21, which are similar to those shown in Figs. 16 and 17 except that the width of each of the protrusions 22 in Figs. 16 and 17 is different from that of the Figs. 18 and 19.

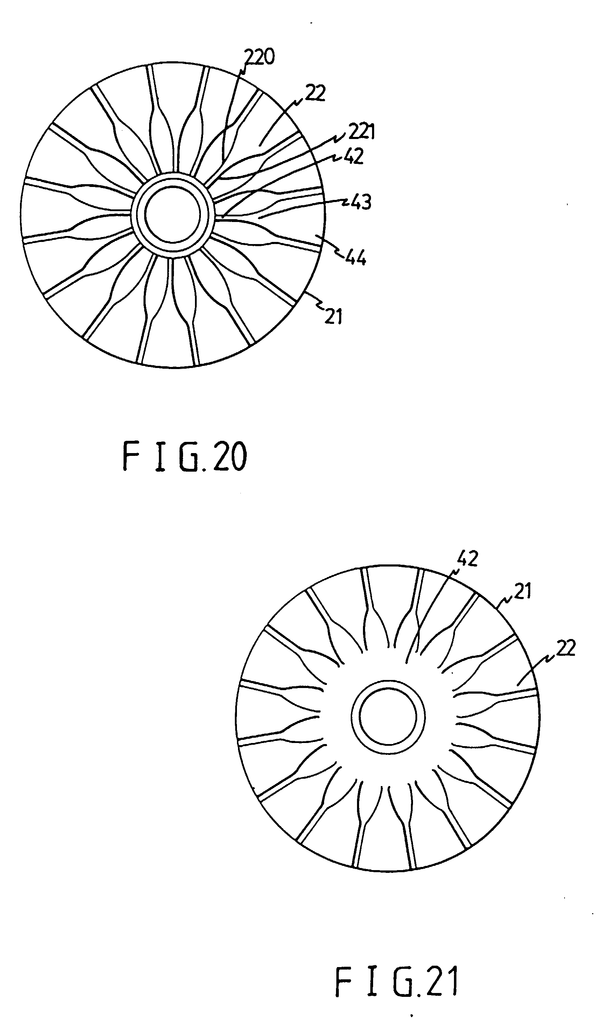

Figure 20 shows the thirteenth embodiment of the disks 21 wherein the first side 220 and the second side 221 of the first section 48 are straight sides, the first side 220 and the second side 221 of second section 43 are curved sides, and the first side 220 and the second side 221 of the third section 44 are divergent and straight sides. Figure 21 shows the fourteenth embodiment of the disks 21 wherein the first side 220 and the second side 221 of the first section 42 of each of the protrusions 22 are flush with the engaging surface.

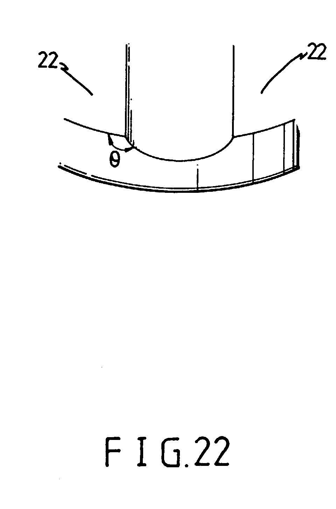

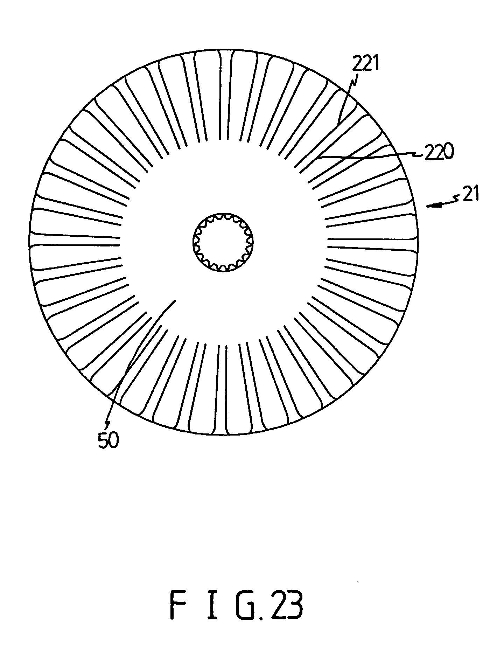

In order to prevent the belt 31 from being worn by the protrusions 22, referring to Fig. 22, the angle θ defined between the engaging surface and the top of the protrusion 22 is larger than 90 degrees. Figure 23 shows the fifteenth embodiment of the disk 21 wherein the first side 220 and the second side 221 can be straight sides or curved sides, and the first sides 220 and the second sides 221 begin from the positions where have a distance measured from the center of the disk 2. That is to say, there is an annular plain area 50 defined between the center of the disk 21 and the positions where the first sides 220 and the second sides 221 begin. It is to be noted that because the belt 31 is made of flexible material so that the protrusions 22 will compress the belt 31 and there will be a suitable frictional force applied to the belt 31. The engagement between the protrusions 22 and the belt 31 performs as the engagement between a gear and a belt engaged with the gear.

The invention is not limited to the above embodiment but various modification thereof may be made. It will be understood by those skilled in the art that various changes in form and detail may made without departing from the scope of the present invention.

## Claims

1. A stepless variable pulley comprising two disks and each of said disks having an inclined engaging surface which has a plurality of protrusions extending radially therefrom, each of said protrusions having at least a first section which is close to the center of said disk, a second section connected to said first section and a third section which is connected to said second section, each of said protrusions having a first side and a second side, the distance between said first side and said second side of said first section being smaller than the distance between said first side and said second side of said second section, the distance between said first side and said second side of said second section being smaller than the distance between said first side and said second side of said third section.

2. The pulley as claimed in claim 1, wherein at least one of said first side and said second side of each of said protrusions is a straight side.

3. The pulley as claimed in claim 1, wherein at least one of said first side and said second side of each of said protrusions is a curved side.

4. The pulley as claimed in claim 1, wherein said first side and said second side of said first section are parallel with each other.

5. The pulley as claimed in claim 1, wherein said first side and said second side of said first section are located divergently from each other.

6. The pulley as claimed in claim 1, wherein said first side and said second side of said second section are located divergently from each other.

7. The pulley as claimed in claim 1, wherein said first side and said second side of said third section are located divergently from each other.

8. The pulley as claimed in claim 1, wherein said first side and said second side of each of said protrusions have a rounded edge.

9. The pulley as claimed in claim 1, wherein said first side and said second side of said first section of each of said protrusions are flush with said engaging surface.
